(19) Europäisches Patentamt
European Patent Office
Office européen des brevets

(11) **EP 4 202 807 A1**

(12) **EUROPEAN PATENT APPLICATION**

(43) Date of publication:
**28.06.2023  Bulletin 2023/26**

(21) Application number: **21275194.5**

(22) Date of filing: **23.12.2021**

(51) International Patent Classification (IPC):
**G06Q 10/06** (2023.01)    **G06Q 10/04** (2023.01)

(52) Cooperative Patent Classification (CPC):
**G06Q 10/063; G06Q 10/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Clickthrough Marketing Limited
Lichfield, Staffordshire WS13 6QA (GB)**

(72) Inventors:
• **EDWARDS, Macy
Lichfield, WS13 6QA (GB)**

• **WITESZCZAK, Ross
London, EC3V 3ND (GB)**
• **FOSTER, David
London, EC3V 3ND (GB)**

(74) Representative: **Kramer, Dani et al
Mathys & Squire
The Shard
32 London Bridge Street
London SE1 9SG (GB)**

Remarks:
Amended claims in accordance with Rule 137(2)
EPC.

(54) **MONITORING AND ANALYSING INTERACTIONS WITH A SYSTEM**

(57)    There is described a computer-implemented method of outputting a result of an analysis of user interactions with a system of items, the method comprising: receiving input data relating to a system, which system comprises a plurality of linked items with at least one of the items being a session-ending item, wherein the input data relates to interactions of one or more users with the linked items; determining a stationary distribution for the system, wherein the stationary distribution indicates the probability of a user reaching each of the session-ending items; determining a conversion rate for the system based on the stationary distribution; altering and/or removing one of the items in dependence on the stationary distribution so as to form an altered system; determining an altered stationary distribution for the altered system; determining an altered conversion rate for the altered system; and providing an output in dependence on the outputting the altered system in dependence on the altered conversion rate being greater than the conversion rate.

Figure 1

EP 4 202 807 A1

**Description**

Field of the invention

The present invention relates to a method of, and an apparatus and system for, analysing the interactions of users with an system. In particular, analysing the interactions of a user with an online system, such as a website.

Background to the Disclosure

Many systems, such as vehicles or websites, comprise a plurality of linked items. For example, a vehicle comprises a plurality of linked mechanical components while a website comprises a plurality of linked webpages. Conventionally, it is difficult to assess whether such a system is configured in an optimal way. Continuing with the example of a website, it can be difficult to assess the effect of removing one of the webpages. With the example of a website, it can be difficult to assess how a modification to a component, such as an engine, will affect the performance of the vehicle as a whole.

Summary of the Disclosure

According to at least one aspect of the present disclosure, there is described a computer-implemented method of outputting a result of an analysis of user interactions with a system of items, the method comprising: receiving input data relating to a system, which system comprises a plurality of linked items with at least one of the items being a session-ending item, wherein the input data relates to interactions of one or more users with the linked items; determining a stationary distribution for the system, wherein the stationary distribution indicates the probability of a user reaching each of the session-ending items; determining a conversion rate for the system based on the stationary distribution; altering (e.g. removing) one of the items in dependence on the stationary distribution so as to form an altered system; determining an altered stationary distribution for the altered system; determining an altered conversion rate for the altered system; and providing an output in dependence on the outputting the altered system in dependence on the altered conversion rate being greater than the conversion rate.

According to at least one aspect of the present disclosure, there is described a computer-implemented method of outputting a result of an analysis of user interactions with an online system of items, the method comprising: receiving input data relating to a system, which system comprises a plurality of linked items, wherein the input data relates to interactions of one or more users with the linked items; analysing the input data based on one or more parameters; and outputting a result of the analysis.

Preferably, at least one of the items comprises an absorbing item.

Preferably, analysing the input data comprises determining a probability of each of the items being a final item.

Preferably, analysing the input data comprises determining a probability of each of the items being a starting item.

Preferably, analysing the input data comprises determining a stationary distribution for the system, wherein the stationary distribution indicates the probability of a user reaching each of the session-ending items.

Preferably, analysing the input data comprises determining a conversion rate for the system. Preferably, analysing the input data comprises determining a conversion rate based on the determined probabilities and/or the stationary distribution.

Preferably, providing an output comprises altering (e.g. removing) one of the items so as to form an altered system and outputting the altered system. Preferably, providing an output comprises altering one of the items in dependence on the determined probabilities and/or the stationary distribution.

Preferably, the method comprises one or more of: predicting an effect of the alteration; determining altered transition probabilities for the altered system, preferably wherein determining the transition probabilities comprises scaling the transition probabilities for the system in dependence on a removed item; determining a probability of each of the items of the altered system being a final item; determining a probability of each of the items of the altered system being a starting item; determining an altered stationary distribution for the altered system; and determining an altered conversion rate for the altered system.

Preferably, outputting the altered system in dependence on the predicted effect of the alteration being positive and/or in dependence on the conversion rate for the altered system being greater than the conversion rate for the system.

Preferably, providing the output is dependent on an importance of the item. Preferably providing the output is dependent on both the importance and the predicted effect.

Preferably, the method comprises determining an importance of the item(s). Preferably, the method comprises determining the importance in dependence on a user input.

According to at least one aspect of the present disclosure, there is described a computer-implemented method of outputting a result of an analysis of user interactions with a system of items, the method comprising: receiving input data relating to a system, which system comprises a plurality of linked items with at least one of the items being a session-ending item, wherein the input data relates to interactions of one or more users with the linked items; determining a stationary distribution for the system, wherein the stationary distribution indicates the probability of a user reaching each of the session-ending items; determining a conversion rate for the system based on the stationary distribution; altering (e.g. removing) one of the items in dependence on the stationary distribution so as to form an altered system; determining an altered stationary distribution for the altered system; determining an altered conversion rate for the altered system; and outputting the altered system in dependence on the altered conversion rate being greater than the conversion rate.

Preferably, the parameters comprise one or more of: a category of each item; an importance of each item; conversion data relating to whether a user converted following an interaction with an item; a conversion count of users who converted following interaction with an item; a depth of an item; a flow between two or more items; a transition probability associated with two or more items; transition probabilities associated with the items; and one or more children of an item.

Preferably, the parameters are associated with one or more of: a user; a plurality of users; a use; and a plurality of uses.

Preferably, the method comprises modifying and/or removing datapoints of the input data in dependence on a feature of said datapoints.

Preferably, the feature comprises one or more of: a type of use; a purpose of a use; a type of user; a duration of a use; a number of interactions associated with a use; a starting item and/or category; and a final item and/or category; a date of a use; and a type of device associated with a user and/or a use.

Preferably, the method comprises modifying (e.g. removing) datapoints of the input data that are associated with uses exceeding a threshold duration.

Preferably, the method comprises modifying datapoints of the input data that are associated with return users.

Preferably, analysing the input data comprises determining one or more of: a journey tree; transition probabilities for moving between two or more of the items; a Markov transition matrix; attributions associated with one or more of the items; and conversion distances associated with one or more of the items.

Preferably, the method comprises identifying a category of each item referenced in the input data, wherein the analysis depends on the identified categories. Preferably, one or more parameters is associated with the categories. Preferably, the parameters comprise transition probabilities between categories.

Preferably, the method comprises determining a category for one or more of the items, preferably determining the categories based on features of the items, more preferably based on strings of characters associated with the items (e.g. URLs).

Preferably, the method comprises determining an altered transition matrix by removing a vector (e.g. a row and/or column) from the transition matrix and scaling the remaining vectors such that each vector sums to one.

Preferably, the method comprises determining a conversion rate for the system; determining an altered conversion rate for a/the altered system; and thereby predicting whether the alteration has a positive effect.

Preferably, the method comprises determining a stationary distribution for the system; determining an altered stationary distribution for a/the altered system; and thereby predicting whether the alteration has a positive effect.

Preferably, the method comprises predicting a magnitude of the effect of a/the alteration.

Preferably, providing an output comprises providing a recommendation to alter the system and/or outputting the altered system.

Preferably, the method comprises testing the altered system, preferably using A/B testing.

Preferably, the method comprises outputting the altered system in dependence on the testing.

Preferably, the method comprises altering one or more of the items so as to increase the probability of subsequent users interacting with said items.

Preferably, the method comprises altering the system in dependence on a user input, preferably comprising: outputting a recommended alteration to a user, receiving a user input relating to the recommended alteration; and altering the system based on the user input.

Preferably, the method comprises altering one or more of the items so as to alter the transition probabilities associated with this item. Preferably, the method comprises altering said items so as to alter a link from said items to one or more further items.

Preferably, the method comprises altering one or more of the items so as to alter the probability of said items being starting items for subsequent users.

Preferably, the method comprises altering the system in dependence on the analysis. Preferably, the method comprises altering and/or removing an item of the system.

Preferably, the input data comprises data identifying the interactions of user with the items during a use of the system.

Preferably, the input data comprises data identifying a percentage of users that interact with a first item and thereafter interact with a second item during a use of the system.

Preferably, providing an output is dependent on a user input and/or confirmation.

Preferably, providing an output comprises outputting a system and/or a starting item in dependence on a characteristic of a user.

Preferably, providing an output comprises outputting a plurality of systems and/or starting item, wherein each of the plurality of systems and/or starting items is suitable for a different type of user.

Preferably, the input data comprises input data relating to a plurality of users of the system and/or a plurality of uses of the system.

Preferably, the method comprises altering and/or remove items from the system for a subset of the users in dependence on a characteristic of said users.

Preferably, the system comprises a website. Preferably, the items comprise webpages. Preferably, the items are linked by weblinks.

According to an aspect of the present disclosure, there is described an apparatus for carrying out the aforesaid method.

According to an aspect of the present disclosure, there is described an apparatus comprising: a communication interface for receiving input data relating to a system, which system comprises a plurality of linked items, wherein the input data relates to interactions of one or more users with the linked items; a processor for: determining a stationary distribution for the system, wherein the stationary distribution indicates the probability of a user reaching each of the session-ending items; determining a conversion rate for the system based on the stationary distribution; altering (e.g. removing) one of the items in dependence on the stationary distribution so as to form an altered system; determining an altered stationary distribution for the altered system; and determining an altered conversion rate for the altered system; and a user interface and/or the communication interface for providing an output in dependence on the altered conversion rate being greater than the conversion rate; analysing the input data based on one or more parameters; and a user interface and/or a communication interface for outputting a result of the analysis.

According to an aspect of the present disclosure, there is described a system comprising the aforesaid apparatus and one or more user devices, wherein the communication interface of the apparatus is arranged to receive the input data from the one or more user devices.

Preferably, the apparatus comprises a webserver and/or the communication interface of the apparatus is arranged to output the result to a webserver.

Any feature described as being carried out by an apparatus, an application, and a device may be carried out by any of an apparatus, an application, or a device. Where multiple apparatuses are described, each apparatus may be located on a single device.

Any feature in one aspect of the disclosure may be applied to other aspects of the invention, in any appropriate combination. In particular, method aspects may be applied to apparatus aspects, and vice versa.

Furthermore, features implemented in hardware may be implemented in software, and vice versa. Any reference to software and hardware features herein should be construed accordingly.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure extends to methods and/or apparatus substantially as herein described with reference to the accompanying drawings.

The disclosure will now be described, by way of example, with reference to the accompanying drawings.

Description of the Drawings

Figure 1 shows a system comprising a plurality of items.

Figure 2 shows a computer device on which the methods disclosed herein may be implemented.

Figure 3 shows a method of outputting analysis results.

Figures 4 and 5 show Markov chain transition graphs.

Figure 6 shows a method of providing an output in dependence on analysis.

Figure 7 shows a journey tree.

Figure 8 shows a Markov transition matrix.

Figure 9 shows a Markov attribution chart.

Figure 10 shows an item distance chart.

Figure 11 shows a system comprising a plurality of computer devices.

Figure 12 shows a detailed system on which the methods disclosed herein may be implemented.

Description of the preferred embodiments

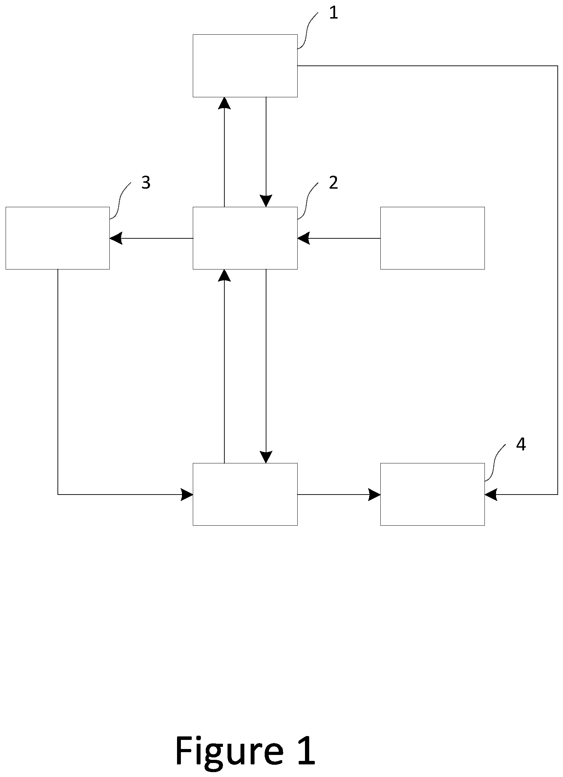

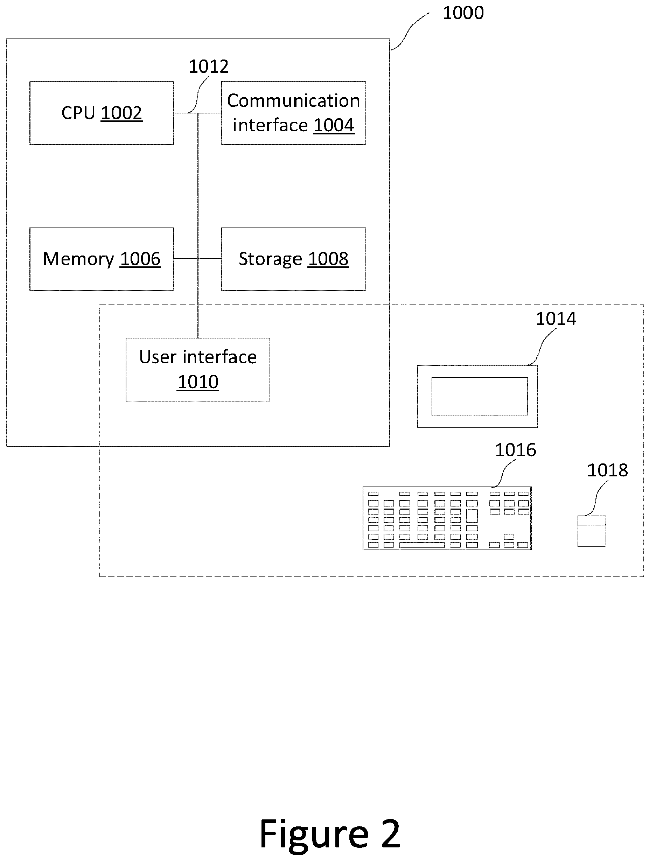

Referring to Figure 1, a system is described which contains a plurality of items, including a first item 2, a second item 4, a third item 3, and a fourth item 4.
The items are linked to each other. The items may be linked in a single direction or in a plurality of directions; with the exemplary system of Figure 1, the second item 2 is linked to the third item 3 in a single, outgoing, direction and the second item is linked to the first item 1 in both of an outgoing and an incoming direction.
In an exemplary embodiment, the system comprises an online system such as a website (or a plurality of websites) and the items are each webpages. In such an embodiment, the first item 1 may include a link to each of the second item 2 and the fourth item 4, while the second item 2 may include a link to both of the first item and the third item 3. Therefore, the user is able to navigate through the items of the system using these links.
A user enters the system via a starting item, interacts with one or more of the items, and then leaves the system via a final item. This series of actions can be termed as a use of the system, a visit to the system, and/or a session. Typically, the final item will either be an item that indicates a successful use or a 'conversion' (e.g. a purchase item) or an item that indicates an unsuccessful use (e.g. an exit item). It will be appreciated that other types of final items may exist, e.g. there may be an ambiguous final item where a user leaves without a purchase but suggests they will revisit the system in the future.
In another exemplary embodiment, the items are components of a machine, such as a car. In such an embodiment, the items interact with each other in dependence on the links between the items. For example, one of the items may be a brake pedal, which is linked to (and affects the operation of) the brakes. Another of the items may be a steering linkage, which both affects and is affected by the wheels.
Referring to Figure 2, the methods, apparatuses, and systems disclosed herein are typically implemented using a computer device 1000. In particular, the methods of analysis described below are typically computer-implemented methods.
The computer device 1000 comprises a processor in the form of a CPU 1002, a communication interface 1004, a memory 1006, storage 1008, and a user interface 1012 coupled to one another by a bus 1014. The user interface comprises a display 1014 and an input/output device, which in this embodiment is a keyboard 1016 and a mouse 1018.
The CPU 1002 executes instructions, including instructions stored in the memory 1006 and/or the storage 1008.
The communication interface 1004 is typically an Ethernet network adaptor coupling the bus 1012 to an Ethernet socket. The Ethernet socket is coupled to a network, such as the Internet. It will be appreciated that any communication medium may be used by the communication interface, such as area networks (e.g. the Internet), infrared communication, and Bluetooth®.
The memory 1006 stores instructions and other information for use by the CPU 1002. The memory is the main memory of the computer device 1000. It usually comprises both Random Access Memory (RAM) and Read Only Memory (ROM).
The storage 1008 provides mass storage for the computer device 1000. In different implementations, the storage is an integral storage device in the form of a hard disk device, a flash memory or some other similar solid state memory device, or an array of such devices.
A computer program product is provided that includes instructions for carrying out aspects of the method(s) described below. The computer program product is stored, at different stages, in any one of the memory 1006, the storage 1008 and/or a removable storage (e.g. a universal serial bus storage device). The storage of the computer program product is non-transitory, except when instructions included in the computer program product are being executed by the CPU 1002, in which case the instructions are sometimes stored temporarily in the CPU or memory. It should also be noted that the removable storage is removable from the computer device 1000, such that the computer program product may be held separately from the computer device from time to time. Different computer program products, or different aspects of a single overall computer program product, are present on the computer devices used by any of the users.

There is also disclosed a system (e.g. a network) that comprises a plurality of computer devices, where each of these computer devices may carry out different parts of the methods disclosed herein. Each of the computer devices may be configured for a particular purpose; for example, a computer device with a powerful processor may be used for analysis, while a computer device with a large display 1014 may be used to display the results of analysis to a user. Typically, the plurality of computer devices are arranged to communicate with each other, so that data can be transmitted between the computer devices.

In particular, the methods described herein may be carried out on a computer device (e.g. a server) that receives input data associated with a plurality of input computer devices. The server may analyse this input data and thereafter provide an output to a further computer device.

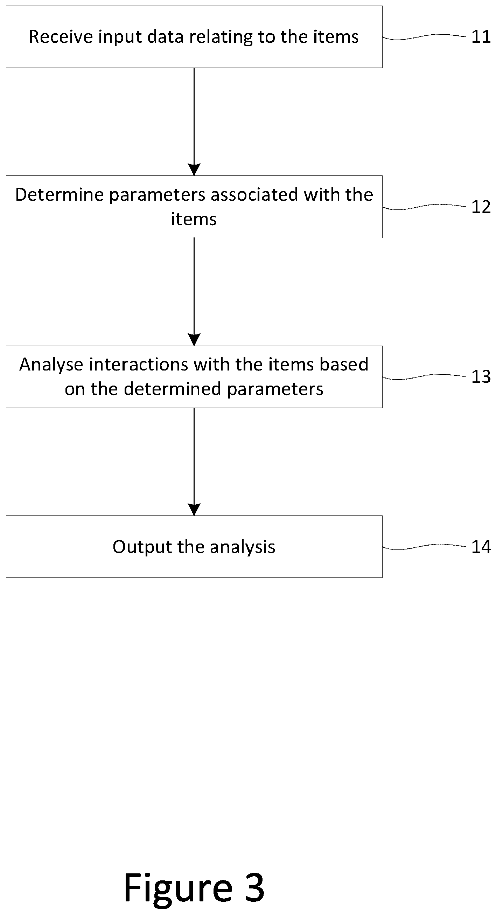

Referring to Figure 3, there is described a method of analysing the interactions of users with the items. For example, where the items are webpages, the method may comprise analysing which links a user has accessed and the ways in which a user has interacted with each of the webpages. Where the items are mechanical components, the method may comprise determining the effect of each component on the other components (e.g. how often a brake pedal is used and how this usage affects the other components). This method is typically performed using a computer device.

In a first step 11, the computer device receives input data relating to the items. This input data comprises datapoints that relate to the interactions of users with the items. For example, the input data may indicate a percentage of users who have interacted with the first item 1 and thereafter interacted with the second item 2 (e.g. who have clicked a link on a first webpage to access a second webpage). Equally, the input data may indicate each of the items with which a user has interacted and/or may indicate an order of interactions for a user.

The input data may relate to interactions with items and/or interaction with categories of items. In this regard, items may be sorted into categories, such as 'introductory' items and 'purchase' items. Throughout this document, references to items disclose references to categories, so that where analysis is described with reference to items it will be appreciated that such analysis may equally be performed based on categories of items (and *vice versa).*

This input data is collected based on interactions of users with the system. Typically, the computer device performing the method of Figure 3 receives input data from a plurality of users or user devices; for example, the computer device performing the method may be a server that receives data from a plurality of personal computers. Thereafter, the server is able to analyse the interactions of the plurality of users.

The input data may comprise one or more of:

- A device identifier, e.g. an identifier associated with a device accessing the system.

- A channel, e.g. an indication of how a user entered the system.

- A campaign, e.g. an indication of a present version of the system.

- A user identifier.

- A use identifier.

- A use number, e.g. the number of times that the device and/or user has used the system.

- A use date.

- A hit number.

- An item event.

- An item transition.

- A categorisation of an item.

Typically, the input data comprises a plurality of such datapoints, relating to a plurality of uses by a plurality of users.

In a second step 12, the computer device determines parameters associated with the items and/or the input data.

The parameters relate to the users, uses, and/or items contained in the input data; for example the parameters may include:

- A grouping and/or category of the items. Continuing with the example of a website, the webpages may be placed in categories depending on a feature of each page (e.g. a homepage, service selection pages, information pages). The computer device may then determine whether a user has interacted with items of a certain category.

- An importance of the items. For example, a payment page may be viewed as a necessary item, whereas an information page may be viewed as an optional item. The computer device may then determine whether a user has interacted with items of a certain importance.

- A starting item.

- A final item.

- The probability of a user interacting with an item during a use (e.g. interacting with the item at least once).

- Conversion data - e.g. the percentage of users who converted following an interaction with an item. In this regard, typically one of the items comprises a target item, such as a purchase webpage, where the owner of the website wishes to direct users to this purchase page. The conversion data relates to the percentage of users who reach the target item following an interaction with another item. Equally, the conversion data may relate to the percentage of users who end up on the payment page of the fourth item having first accessed the system via the first item. More generally, conversion relates to a successful interaction with the system (e.g. with a mechanical system, conversion may comprise an enjoyable or successful use of the system).

- Conversion count - e.g. the count of users who converted following an interaction with an item.

- Depth - e.g. the depth of the item (starting from a root item). In this regard, the starting depth may be zero, so that a user that first accesses the first item 1 may have a depth of zero. If this user then accesses the second item 2, the depth of the second item is one. If the user returns to the first item, the depth of the first item may be two. The depth of an item may increment with each use of a new item or may only increment with each use of a new category of item.

- Flow - e.g. the percentage of users who travelled through an item from a previous item. For example, the percentage of users who travelled through the second item 2 from the first item 1.

- Transitions - e.g. the count of users who travelled through an item from a previous item.

- Name - e.g. the name of the item grouping. In this regard (and as is described further below), each of the items may be part of a group, where the interactions with these items is dependent on the group of the items.

- Children - e.g. the list of items with which a user has interacted following an interaction with a given item. For example, in a use of the system, the children of the first item 1 may be the second item 2 and the fourth item 4.

Each of these parameters is typically determined based on interactions with the items. Equally, each of the parameters may be determined based on interactions with categories of items (e.g. the conversion data may relate to a percentage of users that converted following an interaction with a category of item).

In a practical example, the input data indicates that a user started a use on the first item 1, then moved from the first item 1 to the second item 2, and thereafter have exited the system. Based on this input data, the computer device can determine parameters such as: a conversion rate, which is 0 for this use; transition probabilities, which for this use is 100% from item 1 to item 2 and 100% from item 2 to 'exit'; etc. This simple example considers the determination of parameters for a single use (and a single user). Typically, the computer device would determine parameters for a plurality of uses or users, such as transition probabilities for a plurality of uses and users.

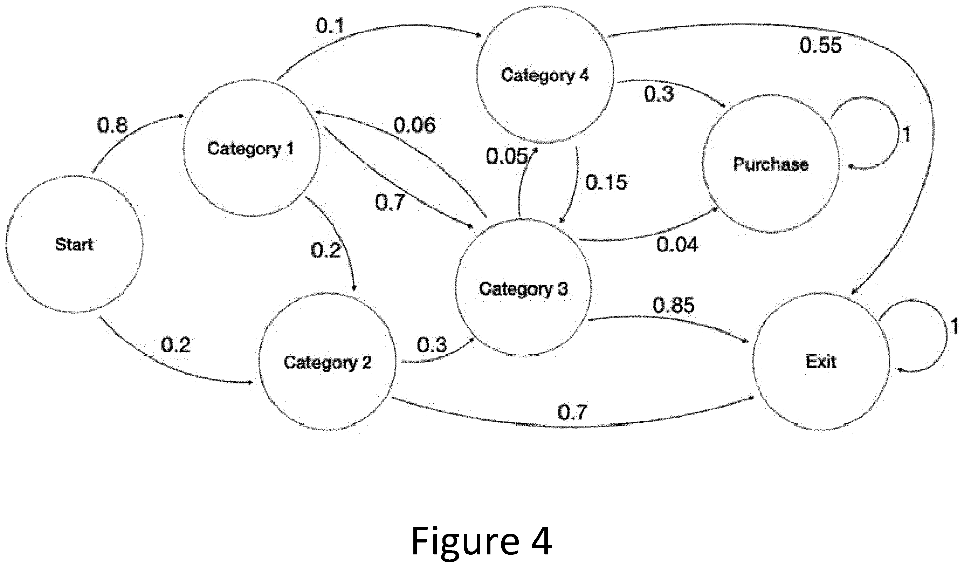

In a third step 13, the computer device analyses interactions with the items based on the determined parameters. Exemplary methods of analysis are described below, for example the determination of a Markov transition matrix is described below with reference to Figure 4.

More generally, the computer device may use any method of analysing the user interactions that enables an assessment of the effect of the items.

In a fourth step 14, the computer device outputs the analysis. For example, the computer device may present the analysis to a user and/or transmit the analysis to another computer device. Equally, the computer device may perform an action based on the analysis (e.g. to remove an item from the system).

The method of Figure 3 enables analysis, and outputs, to be determined based on input data relating to interactions with the system. Therefore, the system can be improved over time as input data is collected.

The categories of each item may be determined based on a user input and/or using a manual process where a user selects a category for each item. Equally, the categories may be determined based on the features of the items, where the computer device determines features for each of the items and places the items into the categories based the features (so that items with similar features are in the same category).

In some embodiments, the categories are determined based on the input data. For example, a plurality of items may be placed into a category based on numerous users interacting with each item of the plurality of items.

Where the items comprise webpages, the items may be categorised based on URLs (so that all URLs that start with a certain string are placed into the same category).

The categorisation of items may use a plurality of the options described above; for example, the computer device may determine categories for the items based on a feature (e.g. the URLs) of the items. A user may then confirm or alter the determined categories.

Referring to Figure 4, an exemplary method of analysing the input data using on a Markov transition matrix is described.

Figure 4 shows a Markov chain transition graph. This graph shows that a user that starts with a given item (e.g. item 1) has an 80% chance of subsequently interacting with an item in a first category and a 20% chance of subsequently interacting with an item in a second category. As can also be seen, such a graph is able to track a proportion of users that exit the system and a proportion of users that complete a purchase (e.g. are 'converted').

The transition graph can also be used to determine the effect of each of the items of the system; for example, it can be determined that a user that interacts with an item in category 3 is likely to exit the system whereas a user that interacts with an item in category 4 is comparatively likely to complete a purchase. Therefore, a user may decide to channel users towards category 4 instead of category 3 (e.g. by redesigning a webpage).

The graph of Figure 4 can be analysed using a Markov transition matrix Q, which matrix describes the probability to go from any page category to any other page category. The computer device is typically arranged to determine such a transition matrix.

For a system $S$ that contains N categories, the Markov transition matrix is a matrix of size N x N. As explained above, where the chain is in category $i$ at step $n$, the probability to hit category j at hit $n+1$ is $Q_{ij}$. For example, in the graph of Figure 4, $Q_{Category\ 1 \rightarrow Category\ 2} = 0.2$ (20%).

To compute the Markov transition matrix Q, the computer device determines how many times users go from an item in category $i$ to an item in category j; typically, this comprises analysing interactions from a plurality of users. Then the computer device transforms these counts into probabilities, by normalising the counts between 0 and 1.

Typically, hits to the same category are ignored during the determination of the parameters, as these hits indicate a user that has not progressed in the session - so $Q_{ii}=0$, for all $i$. In practice, this may relate to a user navigating between similar pages, e.g. between a plurality of FAQ pages. Equally, the transition matrix may be determined for items; in such an embodiment hits to the same category of item are counted.

Table 1 below shows an exemplary transition vector of the transition matrix that is associated with Category 3 of Figure 4. Specifically, the probability of a user moving from an item in Category 3 to an item in another category is shown in the probability column of Table 1 below.

*Table 1*

| Category | Next Category | Probability |
| --- | --- | --- |
| Category 3 | Category 1 | 0.06 |
| Category 3 | Category 2 | 0 |
| Category 3 | Category 3 | 0 |
| Category 3 | Category 4 | 0.05 |
| Category 3 | Purchase | 0.04 |
| Category 3 | Exit | 0.85 |

As can be seen in Table 1, with this exemplary system most users who land on an item in Category 3 subsequently exit the system. Therefore, the administrator of this system may determine that the items in Category 3 should be removed and/or redesigned.

In order to obtain the Markov transition matrix, the computer device structures the data for each of the items and/or categories in a matrix format, such that entries of the matrix represent the probability of moving from page category j to the page category in column i (the 'transition probabilities').

To ensure the Markov chain converges, the computer device typically defines one or more of the items or categories as session-ending items/categories; in this example the "Purchase" and "Exit" categories are session-ending categories. These session-ending categories are arranged to be absorbing states (or absorbing items), so that if a user is at the category "Purchase" they will stay at the category "Purchase" and if a user is at the category "Exit" they will stay at the category "Exit". This can be seen in Figure 4.

Table 2 below shows an exemplary transition matrix based on the system of Figure 4:

*Table 2*

|  | Category 1 | Category 2 | Category 3 | Category 4 | Exit | Purchase |
|---|---|---|---|---|---|---|
| **Category 1** | 0 | 0 | 0.06 | 0 | 0 | 0 |
| **Category 2** | 0.2 | 0 | 0 | 0 | 0 | 0 |
| **Category 3** | 0.7 | 0.3 | 0 | 0.05 | 0 | 0 |
| **Category 4** | 0.1 | 0 | 0.05 | 0 | 0 | 0 |
| **Exit** | 0 | 0.7 | 0.85 | 0.55 | 1 | 0 |
| **Purchase** | 0 | 0 | 0.04 | 0.3 | 0 | 1 |

**Production of starting probabilities**

In addition to the transition probabilities, the computer device typically calculates starting probabilities, that is the probability of a user entering the system via each category.

In other words, the starting probabilities are related to the probability distribution of the Markov chain at time 0, or the likelihood of starting a session from any page category, described with a probability vector.

Given the set of page categories S, the probability that the Markov chain starts at page category iES is defined to be:

$$\pi_0(i) \geq 0 \qquad \forall \, i \in S$$

The starting categories sum to 1 (since a user must enter the system somewhere).

To compute the vector of starting probabilities, the computer device computes the occurrences of users starting the session at any page category. Then the computer device normalises the occurrences between 0 and 1, so they can be considered as probabilities.

**Calculating conversion probabilities using the Markov Chain stationary distribution**

To compute the probability of being in any page category after one hit ($\pi_1$), the computer device multiplies the starting probability vector ($\pi_0$) by the transition matrix Q.

$$\pi_1 = Q * \pi_0$$

More generally, to compute the probability of being at any page category after *n* hits ($\pi_n$), the computer device multiplies the probability vector at time *n* - 1 ($\pi_{n-1}$) by the transition matrix Q, e.g.:

$$\pi_n = Q * \pi_{n-1}$$

This is equivalent to multiplying the starting probability vector $\pi_0$ by the transition matrix Q elevated to the power of *n*, e.g.:

$$\pi_n = Q^n * \pi_0$$

Since all chains eventually reach an absorbing category (e.g. "Purchase" or "Exit"), the probability of reaching each of the absorbing categories from a given category is determined by calculating the above equation as n tends to infinity. In practice, the computer device may determine $\pi_n$ for a large value of n, such as 1000, or the computer device may determine n until the computer reaches a value at which $|\pi_n - \pi_{n-1}| < k$, where k is some convergence value (e.g. 0.001).

Typically, the distribution as n tends to infinity ($\pi_{n \to \infty}$) is referred to as the stationary distribution of the Markov chain. It is a vector that contains the probabilities of landing on each of the absorbing categories.

Considering the exemplary transition matrix of Table 2 and a starting vector that is [0.25 0.25 0.25 0.25 0 0] (e.g. a user is equally likely to start on an item of any of the four categories), the stationary distribution can be determined by considering the equation:

$$\pi_n = \cdot \begin{bmatrix} 0 & 0 & 0.06 & 0 & 0 & 0 \\ 0.2 & 0 & 0 & 0 & 0 & 0 \\ 0.7 & 0.3 & 0 & 0.15 & 0 & 0 \\ 0.1 & 0 & 0.05 & 0 & 0 & 0 \\ 0 & 0.7 & 0.85 & 0.55 & 1 & 0 \\ 0 & 0 & 0.04 & 0.3 & 0 & 1 \end{bmatrix}^n * \begin{bmatrix} 0.25 \\ 0.25 \\ 0.25 \\ 0.25 \\ 0 \\ 0 \end{bmatrix}$$

In this case:

$$as\ n \to \infty, \pi_\infty \to \begin{bmatrix} 0 \\ 0 \\ 0 \\ 0 \\ 0.88 \\ 0.12 \end{bmatrix}$$

Therefore, it can be seen that 88% of visits to the system end in exits and 12% end in purchases.

Using the methods described above, the computer device can calculate the conversion probabilities directly from the transition matrix, simply by calculating its stationary distribution. This is useful because the computer device is then able to estimate the effect of modifying the system (e.g. by removing a category of items from the system).

With the example of Figure 4, a user may wish to determine the effect of removing the items in Category 4 from the system (and the computer device may determine that such removal may be desirable based on a calculated transition table).

In order to determine this effect, the computer device may be arranged to determine the effect of removing a category (and/or an item). In particular, the computer device may be arranged to remove a category, and to alter the transition matrix proportionally so that the sum of each of the remaining columns of the matrix adds up to 1.

This process is described below, where in a first step the computer device removes one of the categories from the transition matrix.

*Table 3*

|  | Category 1 | Category 2 | Category 3 | : Exit | Purchase |
|---|---|---|---|---|---|
| **Category 1** | 0 | 0 | 0.06 | 0 | 0 |
| **Category 2** | 0.2 | 0 | 0 | 0 | 0 |
| **Category 3** | 0.7 | 0.3 | 0 | 0 | 0 |
| **Exit** | 0 | 0.7 | 0.85 | 1 | 0 |
| **Purchase** | 0 | 0 | 0.04 | 0 | 1 |
| **Sum of columns** | 0.9 | 1.0 | 0.95 | 1 | 1 |

As can be seen from this table, by removing Category 4, the sum of probabilities for transitions from Category 1 becomes equal to 0.9 and the sum of probabilities for transitions from Category 3 becomes 0.95.

To evaluate the effect of removing items of Category 4 from the system, the remaining probabilities are scaled such that the components of each transition vector sum to 1. For example, the transition probability from Category 1 to Category 2 is determined as *QCategory* 1 $\to$ *Category* 2 = 0.2*1/0.9 = 0.22.

After the scaling of the probabilities, the computer device can determine an updated (or 'altered') transition matrix as shown in Table 4 below:

*Table 4*

|  | Category 1 | Category 2 | Category 3 | Exit | Purchase |
|---|---|---|---|---|---|
| **Category 1** | 0 | 0 | 0.063 | 0 | 0 |
| **Category 2** | 0.222 | 0 |  | 0 | 0 |
| **Category 3** | 0.778 | 0.3 | 0 | 0 | 0 |
| **Exit** | 0 | 0.7 | 0.895 | 1 | 0 |
| **Purchase** | 0 | 0 | 0.042 | 0 | 1 |

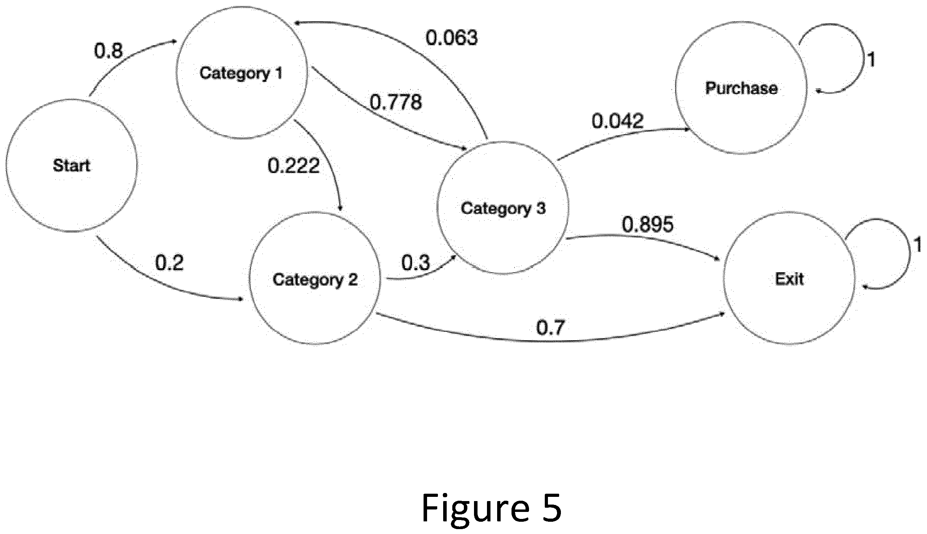

A new Markov transition graph can then be determined using these new values - as shown in Figure 5.

In order to evaluate the effect of removing the items in Category 4, the computer device is arranged to determine a new stationary distribution $\pi_{n \to \infty, new}$.

Scaling the exemplary starting vector used in the example above, the new starting vector is [0.33 0.33 0.33 0 0].

This leads to a new stationary distribution that is calculated as:

$$\pi_n = \cdot \begin{bmatrix} 0 & 0 & 0.063 & 0 & 0 \\ 0.222 & 0 & 0 & 0 & 0 \\ 0.778 & 0.3 & 0 & 0 & 0 \\ 0 & 0.7 & 0.895 & 1 & 0 \\ 0 & 0 & 0.042 & 0 & 1 \end{bmatrix}^n * \begin{bmatrix} 0.33 \\ 0.33 \\ 0.33 \\ 0 \\ 0 \end{bmatrix}$$

Therefore:

$$as\ n \to \infty, \pi_{\infty, new} \to \begin{bmatrix} 0 \\ 0 \\ 0 \\ 0 \\ 0.97 \\ 0.03 \end{bmatrix}$$

Therefore, when Category 4 is removed, it can be expected that 97% of visits to the system will end in exits and 3% will end in purchases. This is a substantial reduction in the conversion percentage and so it can be determined that category 4 should not be removed from the system.

More generally, the computer device may compute a difference between the conversion rate before removing an item (or category) and the conversion rate after removing an item (or category). This difference may then be normalized. For example, the computer device may calculate the equation:

$$\psi = \frac{\pi_\infty(Conversion|Without\ Category\ 4) - \pi_\infty(Conversion|With\ Category\ 4)}{\pi_\infty(Conversion|With\ Category\ 4)}$$

Or more generally the computer device may calculate the equation:

$$\psi = \frac{\pi_\infty(Success|after\ change) - \pi_\infty(Success|before\ change)}{\pi_\infty(Success|before\ change)}$$

Where, $\psi$ is a variable relating to the effect of the change.

It will be appreciated that the denominator of this equation may be set to 1 (e.g. that the computer device may determine $\psi$ as the difference between the probability of success after a change and the probability of success before a change).

The computer device is able to determine whether an alteration to the system is beneficial or not based on $\psi$. In particular:

- If $\psi$ is negative, the computer device is able to determine that the alteration will likely have a negative effect.
- If $\psi$ is zero, the computer device is able to determine that the alteration will likely have no effect.
- If $\psi$ is positive, the computer device is able to determine that the alteration will likely have a positive effect.

With the example of removing Category 4, $\psi = \frac{3-12}{12} = -0.75$. Therefore, it can be seen that removing Category 4 has a negative effect.

The magnitude of $\psi$ indicates the likely magnitude of a change, where a large magnitude of $\psi$ indicates a large likely effect (e.g. if $\psi$ is very large and positive, this indicates that a change will likely be very beneficial and/or that a change is very likely to be beneficial). Therefore, it can be seen that removing Category 4 has a large negative effect.

The computer device is then able to deliver an output in dependence on this analysis.

It will be appreciated that while the above description has referred to the use of a Markov transition matrix as part of the analysis of the input data, various other methods of analysis may be used to evaluate the interactions of a user with the items of the system.

In various embodiments, the analysis comprises the determination of one or more of:

- A journey tree, e.g. the determination of a tree-based diagram that indicates the paths taken by users through the site.
- Transition probabilities and/or Markov transitions, e.g. the determination of the probabilities of transitioning between items.
- Attributions and/or Markov Attributions, e.g. the determination of an impact of each item on a conversion rate and/or a success rate.
- Conversion distances, e.g. the determination of a distance between each item and conversion and/or success.

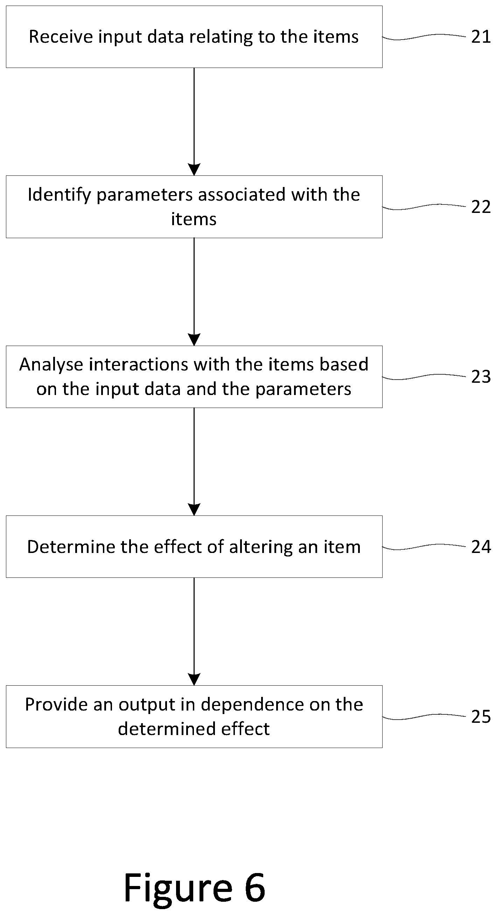

In general, as is described with reference to Figure 6, the computer device is typically arranged to determine the effect of altering (e.g. deleting or modifying) one of the items and to provide an output based on the determined effect.

Specifically, the first step 21, the second step 22, and the third step 23, of a method performed by the computer device may be the first step 11, the second step 12, and the third step 13 of the method of Figure 3. In a fourth step 24, the computer device determines the effect of altering one or more of the items of the system. In a fifth step 25, the computer device provides an output in dependence on the determined effect.

The output may comprise the computer device altering the system in dependence on the analysis. In particular, the computer device may alter (e.g. remove) an item if the determined effect of altering that item is positive. With the example of a website, the computer device may be arranged to automatically update the website based on the determined effect so that the computer device automatically deletes web pages if this deletion is likely to be beneficial. Equally, the computer device may alter web pages (e.g. by removing or adding links to other web pages); in particular, the computer device may alter web pages, or more generally items, so as to alter the transition probabilities between items. This updating may be based on a user input or confirmation, so that the output may be a recommendation to alter one or more of the items where a human user can then approve or reject this recommendation.

The output, and the updating, may be dependent on an importance of the items. For example, Category 3 may relate to a terms and conditions page which is necessary for the system. Or Category 3 may relate to a braking system. Therefore, even though interactions with Category 3 frequently lead to Exits, this category may be necessary. The computer device may determine an importance of an item/category and provide the output in dependence on this importance. For example, the threshold required (e.g. the value $\psi$ required) for recommending the alteration of an unimportant item may be less than the threshold required for altering an important item.

The importance may be determined based on a user input or based on a feature of the items; for example, a user may be able to select from a list of possibilities for each item (e.g. to identify whether an item is 'optional', 'necessary and modifiable', or 'necessary and unmodifiable').

In some embodiments, the computer device is arranged to perform further testing (e.g. A/B testing) in dependence on the determined effect. For example, if the determined value of $\psi$ (or more generally, the determined effect of altering the system) is positive the computer device may update the system for a subset of the users of the system and determine if the effect is positive in practice. As part of the further testing, the computer device typically determines whether a rate of success of an updated system exceeds the rate of success for the original system (e.g. whether the conversion rate increases). The computer device may then provide an output in dependence on this further testing, where the further testing allows a prediction of an affect to be verified.

This further testing typically comprises outputting the altered system, e.g. outputting the altered system to a plurality of different users, and then receiving further input data relating to the altered system.

This output may be the altered system, where the computer device may output the altered system to future users that are accessing the system.

In a practical example, the computer device determines that removing an item from the system will likely have a beneficial effect. The computer device then removes this item from the system for a subset of the users (so that a first subset of the users continues to use the original system and a second subset of the users uses an updated system). The computer device then determines whether the actual effect of the alteration is positive, e.g. whether the second subset of users has a better experience than the first subset. If the alteration has a positive effect, then the updated system is shown to all of the users.

In order to improve the results of the analysis, in some embodiments the computer device is arranged to modify the input data before the determination of the parameters. For example, the computer device may remove and/or modify datapoints of the input data in dependence on features of those datapoints.

In various embodiments, the computer device is arranged to remove and/or modify datapoints of the input data in dependence on:

- A type of use and/or a type of user. For example, the computer device may determine whether a user of the system is a first time user and/or whether a user has previously had a successful use of the system (e.g. a purchase). This may comprise the computer device identifying a user login, identifying a cookie relating to a user, and/or identifying a user identifier (e.g. the IP address of a computer device that a user is using to access the system). Input data relating to existing users may be treated differently to input data relating to new users. In particular, the computer device may determine:

  ◦ Whether a user is a first time user or a return user.
  ◦ Whether there is a conversion associated with the user (e.g. whether a user has previously had a successful interaction with the system).
  ◦ Whether the user has entered the system via a referral (e.g. from a partner site) or via an organic entry (e.g. via a search engine).

- A duration of a use. For example, the computer device may determine whether a user has used the system for a matter of hours or for a matter of days. Input data relating to uses (e.g. journeys) that exceed a threshold duration may be removed.
- A date of a use, e.g. a month or a week in which a use has occurred.
- A type of device associated with a user and/or a use (e.g. whether a user has accessed the system using a smartphone or a laptop).
- A number of interactions associated with a use or a user. The computer device may modify the input data based on a number of interactions associated with the input data, for example a number of pages of a website that a user has visited during a use of the system. Datapoints relating to users that have interacted with a large number of items (above a threshold number) may be removed from the input data.
- A liveness of a user. For example, the computer device may determine whether a user is a live user or an automated user (where datapoints associated with automated users, such as webcrawlers, may be removed).
- A characteristic of a user, such as a location, an age, a background, etc.) The input data may be filtered based on user characteristics (where it may then be determined that an item should only be shown to users with certain characteristics). This enables the system to be altered in dependence on a user of the system, so that young users may be shown a different system than older users.
- A starting item and/or category and a final item and/or category. The computer device may then remove input data relating to certain starting and/or final items.
- A purpose of a use (e.g. purchasing, research, etc.).

Equally, the computer device may provide an output in dependence on the above features; so that the computer device may determine a transition matrix and then alter this matrix based on features of the input data used to determine the matrix. The computer device may then output a first matrix associated with first time users, a second matrix associated with second time users, etc.

Datapoints that are associated the above features may be removed from the input data. Equally, these datapoints may be modified and/or scaled. For example, the datapoints may be modified so that during the analysis datapoints relating to first time users have a greater effect than datapoints relating to return users. In practice, return users are unlikely to revisit certain pages (e.g. once a user has read an FAQ once they will likely not read it again). The datapoints may be modified to account for this; this modification may comprise including a flag in the datapoint (or more generally an indication of a feature of the datapoint) so that during analysis the computer device is able to take this into account.

The above methods of filtering the input data can be used to provide outputs for various types of data, so that the computer device may output separate results for first time users and return users. This enables an administrator of the system to assess the interactions of various types of users with the system so that alterations to the system can be made with specific types of user in mind.

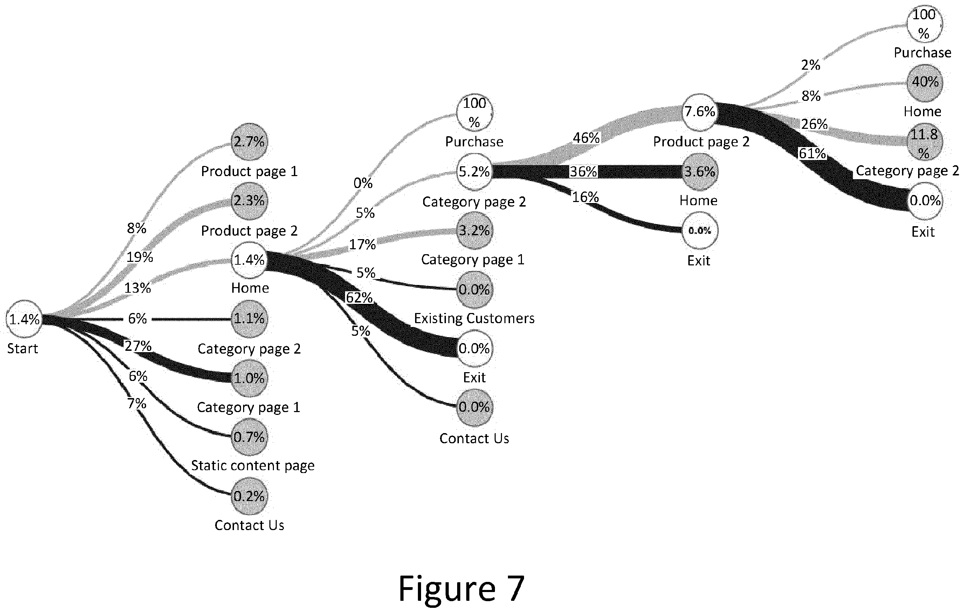

Referring to Figure 7, a further type of analysis is described that depends on a journey tree.

This journey tree shows the conversion rate from a given item as well as the journey taken to reach an absorbing state (e.g. a purchase or an exit). Similarly to the transition matrix, this enables the computer device to evaluate the effect of each of the items.

In particular, the journey tree can be used to identify which pathways are detracting from the overall conversion probability.

For example, in the example of Figure 7, whilst conversion likelihood is 1.4% overall for this audience, this differs significantly between landing page (2.7% of users who start on Product page 1 users convert vs only 0.2% of users who start on Contact Us). 52% of Users who land on the Homepage exit the system without traversing to a different item category. Those who do traverse to a different category choose Category page 2, 5% of the time. This action increases their conversion likelihood to 5.2%.

From the Category page 2 category, 43% of users move on to the Product page 2 category, whereas 36% return to the Homepage. Those users who return to the Homepage now have a 3.6% conversion likelihood, compared to only 1.4% previously, so that the computer device can determine that the Category page 2 category has added some value to their journey (and that future users should perhaps be funnelled towards this category).

Finally, from Product page 2 category, 2% of users purchase immediately, with 61% exiting the site. Other users explore the site further, with a much-increased conversion likelihood.

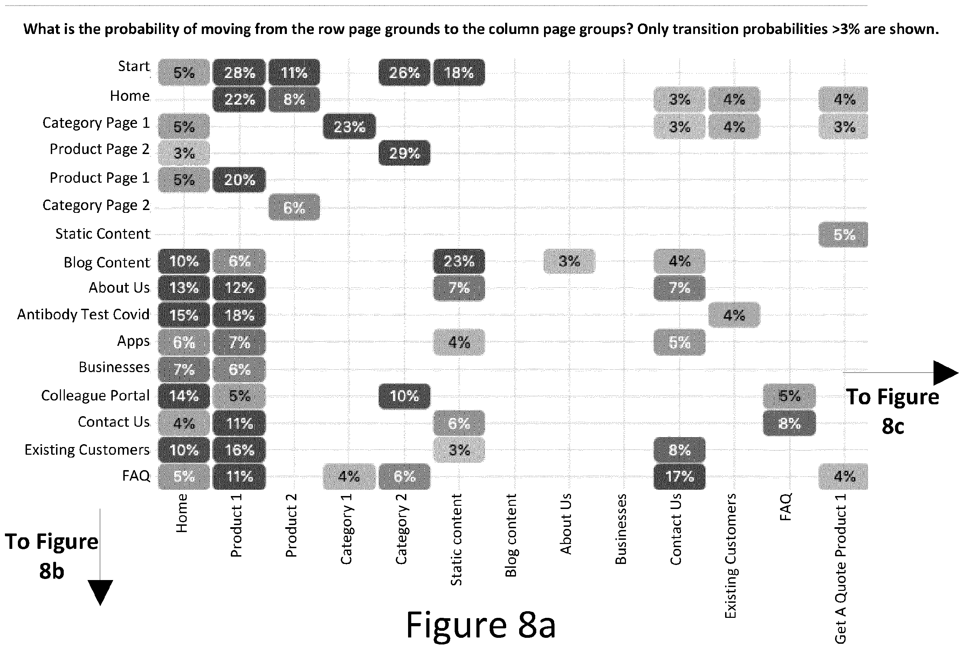

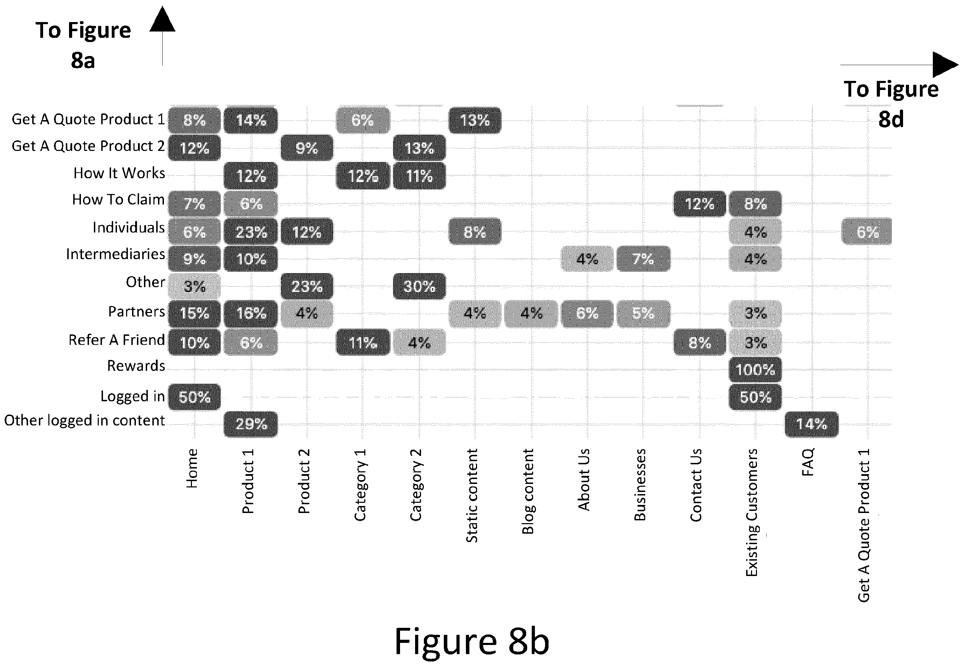

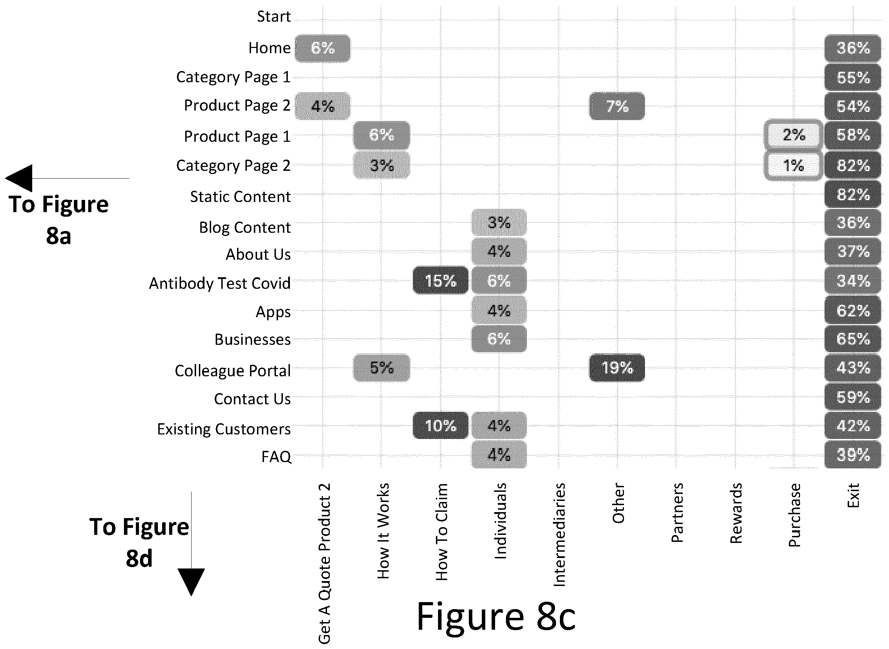

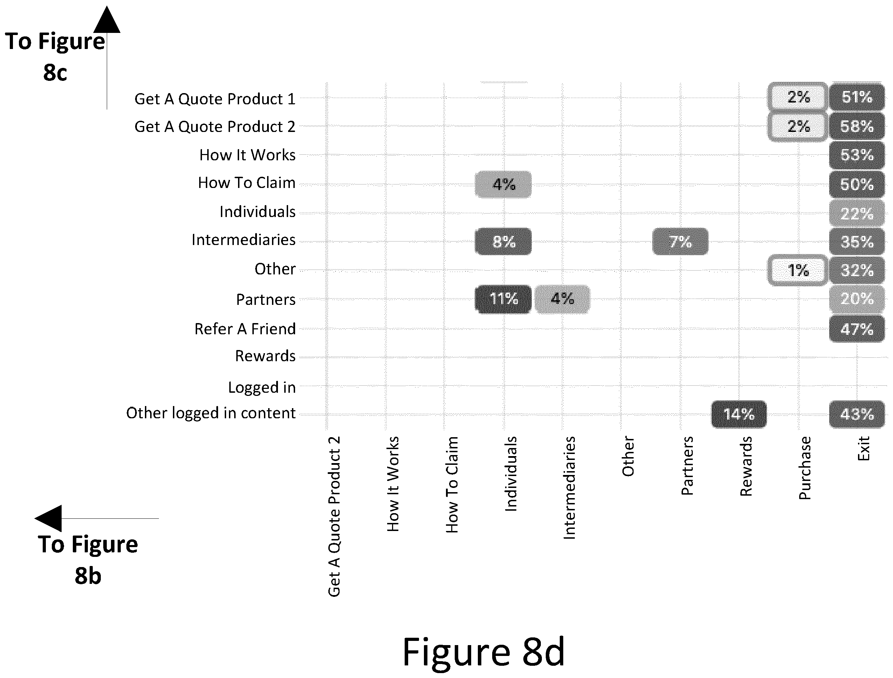

Figure 8 shows a transition matrix (more specifically, a Markov transition matrix) for a system with a substantial number of categories. This system has two absorbing states: "Purchase" and "Exit". This transition matrix does not show transition probabilities of less than 3% (so that the probabilities that are shown do not sum to 1).

The Markov transition matrix is an indication of how users move around the site, under the assumption that the transition probability of a user moving from a first item to a second item is independent of how that user arrived at the first item. Notably, this way of considering the data contrasts with the Journey Tree view described with reference to Figure 7, where the statistics are completely dependent on the pathway taken to arrive at the node.

The assumption that the transition probability for an item is independent of how a user arrived at that item allows the representation of the transition probabilities in a two-dimensional matrix, where the cell at the first row and the second column shows the probability of moving from the first item to the second item. The matrix is therefore a condensed view of exactly how users navigate between different areas of the site.

It will be appreciated multi-dimensional transition matrices are possible. For example, a three-dimensional matrix could be used to determine/display the probability of a user moving from the first item to the second item given an origin item (where the third dimension would be associated with the set of possible origin items). Further dimensional matrices enable the determination/display of various combinations of interactions.

Once the computer device has determined the transition matrix, the transition matrix can be used in several ways.

Firstly, the computer device may use the matrix to identify the items that lead to a direct conversion of users (those items where at least some users move on to the Purchase category) and those items used as a starting item page.

This analysis may be used to provide an output. For example, it may be determined that it would be beneficial to route users through certain items before they reach payment items.

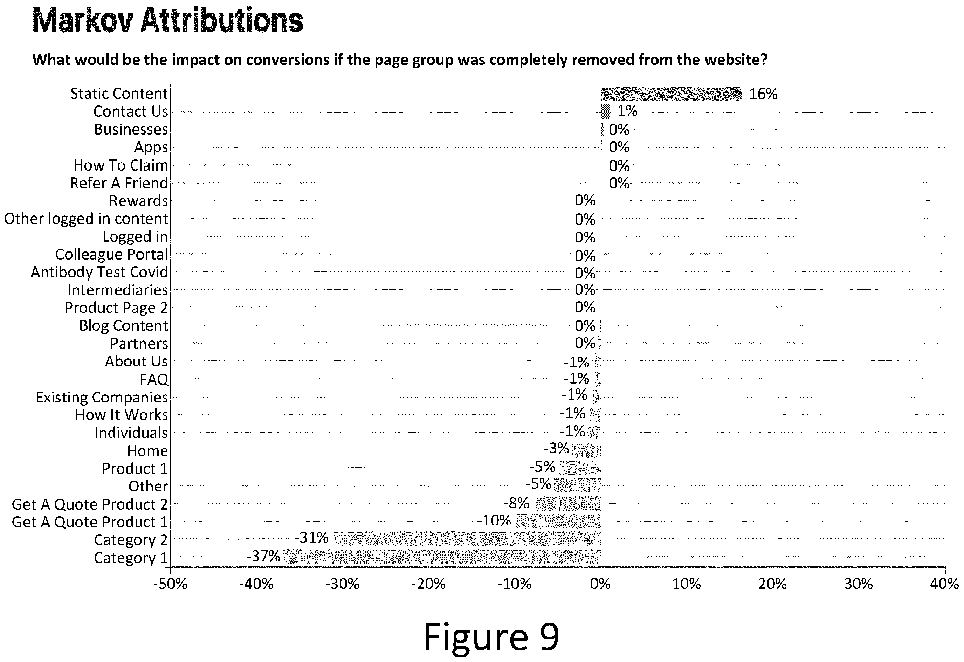

As has been previously described, the analysis may be used to determine the effect of removing (or otherwise altering) an item or a category. This effect may be displayed using a Markov attribution chart, as shown in Figure 9.

Equally, the analysis may be used to determine the effect of altering links between categories, so that the output may comprise altering an item to include a prominent connection to another item. With the example of a website, a webpage may be altered to contain a prominent link to another webpage. The effect of such an alteration may be predicted using computer analysis (e.g. by estimating a change in a transition probability) and then confirmed by further testing.

The output of the method (e.g. the further testing) may be dependent on a type of the system. For example, commerce websites may be treated differently to charity websites.

Figure 9 relates to the transition chart of Figure 8 and shows that the likely effect of removing the Static content item category is that the conversion rate will increase. This analysis can be used in conjunction with the journey tree and transition matrix to identify how users are interacting with a category of item and may be used to recommend that the Static content items are altered or removed. This recommendation may be based on an importance of these items, where the recommendation may only be output if the items have been indicated by a user to be modifiable.

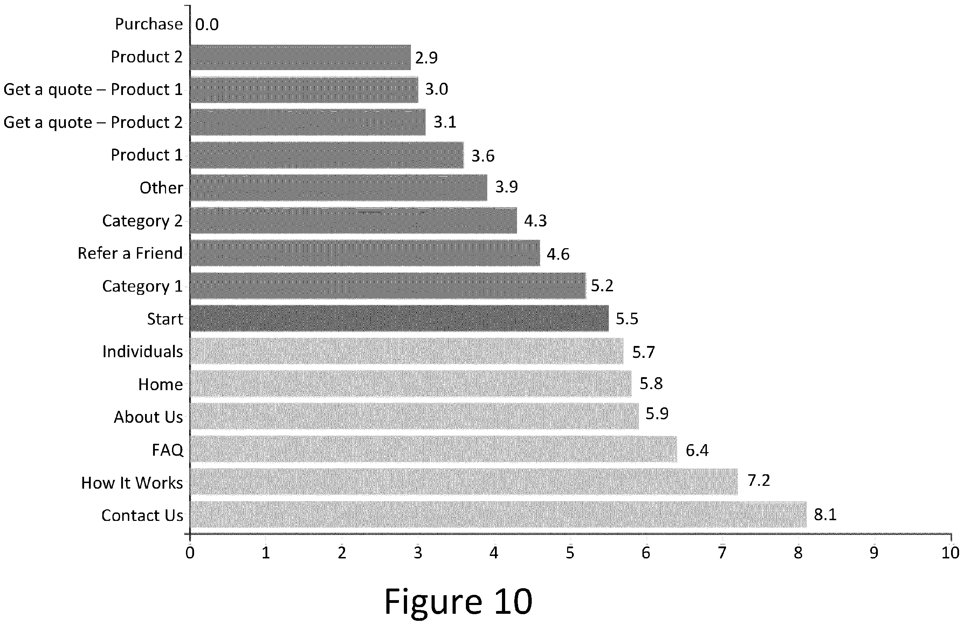

Referring to Figure 10, a further type of analysis that may be used is a determination of item distance; that is a number of jumps between items before conversion. With the example of Figure 10, it can be seen that users move from the Product 2 category to conversion (e.g. the Purchase category) in only 2.9 jumps. Conversely, users move from the Contact Us page to conversion in 8.1 jumps. Therefore, the computer device may alter the system so as to guide users towards the Product 2 category.

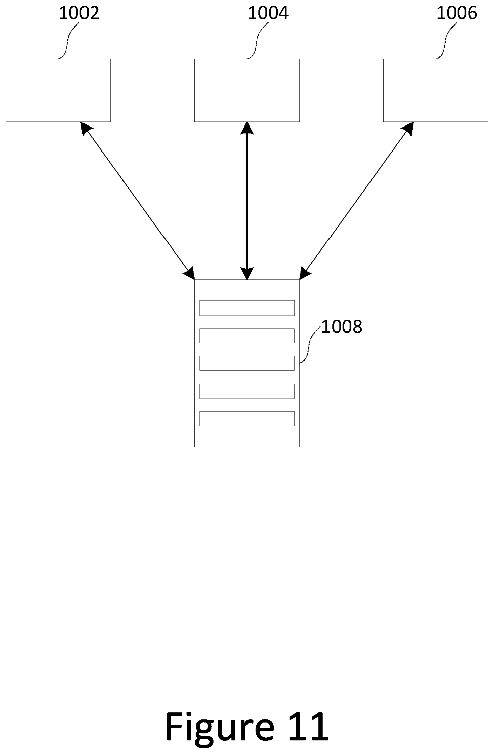

Referring to Figure 11, the methods and systems disclosed herein are typically implemented using a network that comprises a plurality of computer devices. In particular, the network may comprise a plurality of user devices 1002, 1004, 1006 from which the input data is collected and a server 1008 on which the analysis is performed (and using which analysis parameters may be set).

The server 1008 may also be arranged to host a system, such as a website, and/or to interact with another computer device that hosts a system. Therefore, the server may receive a plurality of transmissions comprising the input data, perform the analysis, and thereafter output a transmission comprising an output, such as the results of the analysis and/or an alteration of the system. This output may be transmitted to one of the user devices and/or to another computer device.

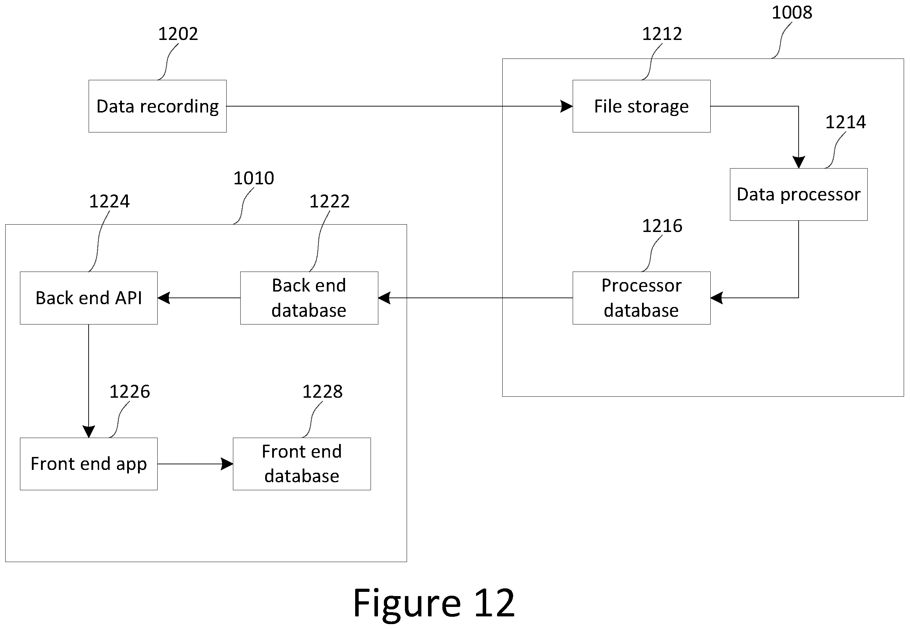

Referring to Figure 12, an exemplary arrangement of modules is described that may be used to implement the methods disclosed herein.

A data recording module 1202 is arranged to record the input data. This module may be implemented in a distributed manner, where the module is present on the plurality of user devices 1002, 1004, 1006. In particular, the data recording module may comprise an application and/or a programme that records session data associated with visits to a website (e.g. an indication of user journeys through the website).

The recording/collection of data may for example involve the use of: Adobe Analytics, Google Analytics, or Javascript.

The input data from the data recording module 1202 is transferred to a file storage module 1212 that is located on the server 1008. The input data is then analysed using a data processing module 1214 on the server. The data processing module is typically arranged to periodically analyse data, where the data may be purged from the file storage module following analysis to ensure that the input data being analysed relates to a current configuration of the system. More generally, the server may be arranged to identify an alteration of the system and to remove data from the file storage module in dependence on this alteration (e.g. to remove data relating to an item that has recently been altered).

The methods of analysis described herein are typically performed on a regular basis. Similarly, the transfer of data from the data recording module 1202 to the server may occur on a regular basis. The analysis and/or the transfer of data may occur at least once per month, at least once per week, and/or at least once per day. Equally, the analysis and/or the transfer of data may occur in dependence on an event, such as a user reaching an absorbing state, the occurrence of a successful conversion and/or a user input.

In some embodiments, the computer device is arranged to determine a number of conversions per day and to implement the method in dependence on this number of conversions. More specifically, the computer device may determine a number of days for which data is needed based on the conversions per day.

The results of the analysis are output from the data processor module 1214 to a processor database module 1216. These results can thereafter be retrieved from the processor database module and used to provide an output.

In particular the processor database module may provide an output to a website server 1010. This output may be provided to a back end database module 1222 of the website server, which back end database module feeds into a back end database module 1224, which feeds into a front end application module 1226, which feeds into a front end database module 1228. This combination of modules on the website server is used to provide the system, so that by providing an output to these modules the server 1008 is able to effect an alteration on the system so as to update the system. In such a way, the server is able to alter the system in dependence on an analysis of the input data.

Exemplary outputs include (e.g. recommendations to, or actions to):

- Create a new item.
- Alter an item (e.g. so as to alter the links between the item and another time and/or to combine the item with another item).
- Alter the starting probability of an item (e.g. by altering the code of a website to direct new users to a certain item).
- Alter the system for a certain grouping (or audience) of users (e.g. so that first time users and return users see different systems or so that logged in users and not logged in users see different systems).
- Alter a category of an item.
- Provide an altered system.

The output is typically provided to a further device, such as a webhost server or a device associated with a system administrator. This enables the administrator to alter the system based on the output. Where the system relates to a vehicle, the output may comprise a recommendation to alter the vehicle and this recommendation may be output to a designer of the vehicle.

EP 4 202 807 A1

Alternatives and modifications

It will be understood that the present invention has been described above purely by way of example, and modifications of detail can be made within the scope of the invention.

For example, the computer device may provide a plurality of outputs. In particular, the computer device may output a plurality of different systems, where each system is associated with a different type of user. Therefore, users who subsequently attempt to access the system are directed to a system based on a characteristic of these users. This enables the provision of a system that is optimised for a wide range of users (e.g. for both children and adults). In particular, the users may be directed to a starting page in dependence on a characteristic of the users; this enables a single system to be provided, where the starting page channels each type of user through a journey tree that is optimised for that type of user. In an example, the computer device may provide an altered system in which return users are directed to a different starting item than first time users.

In some embodiments, the computer device is arranged to compare outputs for a plurality of categories and/or potential systems. For example, the computer device may output a predicted conversion percentage for a plurality of possible systems, where a user is then able to evaluate the systems and to determine based on this evaluation whether an existing system should be altered.

The output may be dependent on the analysis. In particular, the computer device may be arranged to provide an output in dependence on a threshold value being exceeded (e.g. the computer device may provide an output only if an alteration to an item is predicted to have an improvement in conversion of over 10%). Where the output comprises a journey tree and/or a transition matrix, only values above a certain threshold (3%) may be output.

Reference numerals appearing in the claims are by way of illustration only and shall have no limiting effect on the scope of the claims.

**Claims**

1. A computer-implemented method of outputting a result of an analysis of user interactions with an online system of items, the method comprising:

   receiving input data relating to a system, which system comprises a plurality of linked items with at least one of the items being a session-ending item, wherein the input data relates to interactions of one or more users with the linked items;
   determining a stationary distribution for the system, wherein the stationary distribution indicates the probability of a user reaching each of the session-ending items;
   determining a conversion rate for the system based on the stationary distribution;
   altering and/or removing one of the items in dependence on the stationary distribution so as to form an altered system;
   determining an altered stationary distribution for the altered system;
   determining an altered conversion rate for the altered system; and
   providing an output in dependence on the altered conversion rate being greater than the conversion rate.

2. The method of any preceding claim, wherein providing an output comprises transmitting the output to a further computer device, preferably to a further device that is associated with an administrator of the system.

3. The method of any preceding claim, wherein providing the output is dependent on a user input and/or confirmation, preferably wherein the method comprises outputting a recommended alteration to a user, receiving a user input relating to the recommended alteration; and altering the system based on the user input.

4. The method of any preceding claim, comprising testing the altered system and providing the output in dependence on the testing, preferably wherein the testing comprises A/B testing.

5. The method of any preceding claim, comprising one or more of:

   altering an item so as to increase the probability of subsequent users interacting with said item;
   altering an item to alter the transition probabilities associated with the item, preferably altering said item so as to alter a link from said item to one or more further items;
   altering an item so as to alter the probability of said item being a starting item for subsequent users; and
   altering the system in dependence on the analysis, preferably altering and/or removing an item of the system.

**6.** The method of any preceding claim, wherein analysing the input data comprises determining a probability of each of the items being a final item and/or determining a probability of each of the items being a starting item.

**7.** The method of any preceding claim, comprising one or more of:

predicting an effect of the alteration;
determining altered transition probabilities for the altered system, preferably wherein determining the transition probabilities comprises scaling the transition probabilities for the system in dependence on a removed item;
determining a probability of each of the items of the altered system being a final item;
determining a probability of each of the items of the altered system being a starting item;
determining an altered stationary distribution for the altered system; and
determining an altered conversion rate for the altered system.

**8.** The method of any preceding claim, comprising outputting the altered system in dependence on the predicted effect of the alteration being positive and/or in dependence on the conversion rate for the altered system being greater than the conversion rate for the system.

**9.** The method of any preceding claim, wherein the analysis is dependent on one or more of:

a category of each item;
an importance of each item;
conversion data relating to whether a user converted following an interaction with an item;
a conversion count of users who converted following interaction with an item;
a depth of an item;
a flow between two or more items;
a transition probability associated with two or more items;
transition probabilities associated with the items; and
one or more children of an item.

**10.** The method of any preceding claim, comprising modifying and/or removing datapoints of the input data in dependence on a feature of said datapoints, preferably wherein the feature comprises one or more of:

a type of use;
a purpose of a use;
a type of user;
a duration of a use;
a number of interactions associated with a use;
a starting item and/or category;
a final item and/or category;
a date of a use; and
a type of device associated with a user and/or a use.

**11.** The method of claim 10, comprising modifying datapoints of the input data that are associated with uses exceeding a threshold duration and/or modifying datapoints of the input data that are associated with return users.

**12.** The method of any preceding claim, comprising identifying a category of each item referenced in the input data, wherein the analysis depends on the identified categories, preferably wherein one or more parameters is associated with the categories, more preferably wherein the parameters comprise transition probabilities between categories.

**13.** The method of any preceding claim, comprising determining an altered transition matrix by removing a vector (e.g. a row and/or column) from a transition matrix and scaling the remaining vectors such that each vector sums to one.

**14.** The method of any preceding claim, wherein the input data comprises one or more of:

datapoints identifying the interactions of a user with the items during a use of the system; and
datapoints identifying a percentage of users that interact with a first item and thereafter interact with a second item during a use of the system.

**15.** An apparatus comprising:

a communication interface for receiving input data relating to a system, which system comprises a plurality of linked items, wherein the input data relates to interactions of one or more users with the linked items;

a processor for:

determining a stationary distribution for the system, wherein the stationary distribution indicates the probability of a user reaching each of the session-ending items;

determining a conversion rate for the system based on the stationary distribution;

altering and/or removing one of the items in dependence on the stationary distribution so as to form an altered system;

determining an altered stationary distribution for the altered system; and

determining an altered conversion rate for the altered system; and

a user interface and/or the communication interface for providing an output in dependence on the altered conversion rate being greater than the conversion rate.

**Amended claims in accordance with Rule 137(2) EPC.**

**1.** A computer-implemented method of outputting a result of an analysis of user interactions with an online system of items, the method comprising:

receiving input data relating to a system from a plurality of input computer devices, wherein the system comprises a plurality of linked items with at least one of the items being a session-ending item, wherein the input data relates to interactions of one or more users with the linked items;

determining a stationary distribution for the system, wherein the stationary distribution indicates the probability of a user reaching each of the session-ending items;

determining a conversion rate for the system based on the stationary distribution;

altering and/or removing one of the items in dependence on the stationary distribution so as to form an altered system;

determining an altered stationary distribution for the altered system;

determining an altered conversion rate for the altered system; and

outputting the altered system to one or more output computer devices in dependence on the altered conversion rate being greater than the conversion rate.

**2.** The method of any preceding claim, comprising:

determining an item distance for one or more items, wherein the item distance is associated with a number of interactions that a user has before conversion following an interaction with an item; and

altering and/or removing one of the items in dependence on the determined item distance(s) so as to form an altered system that has a reduced expected number of interactions before conversion.

**3.** The method of any preceding claim, wherein providing an output comprises transmitting the output to a further computer device, preferably to a further device that is associated with an administrator of the system.

**4.** The method of any preceding claim, wherein providing the output is dependent on a user input and/or confirmation, preferably wherein the method comprises outputting a recommended alteration to a user, receiving a user input relating to the recommended alteration; and altering the system based on the user input.

**5.** The method of any preceding claim, comprising testing the altered system and providing the output in dependence on the testing, preferably wherein the testing comprises A/B testing.

**6.** The method of any preceding claim, comprising one or more of:

altering an item so as to increase the probability of subsequent users interacting with said item;

altering an item to alter the transition probabilities associated with the item, preferably altering said item so as to alter a link from said item to one or more further items;

altering an item so as to alter the probability of said item being a starting item for subsequent users; and
altering the system in dependence on the analysis, preferably altering and/or removing an item of the system.

7. The method of any preceding claim, wherein analysing the input data comprises determining a probability of each of the items being a final item and/or determining a probability of each of the items being a starting item.

8. The method of any preceding claim, comprising one or more of:

   predicting an effect of the alteration;
   determining altered transition probabilities for the altered system, preferably wherein determining the transition probabilities comprises scaling the transition probabilities for the system in dependence on a removed item;
   determining a probability of each of the items of the altered system being a final item;
   determining a probability of each of the items of the altered system being a starting item;
   determining an altered stationary distribution for the altered system; and
   determining an altered conversion rate for the altered system.

9. The method of any preceding claim, wherein the analysis is dependent on one or more of:

   a category of each item;
   an importance of each item;
   conversion data relating to whether a user converted following an interaction with an item;
   a conversion count of users who converted following interaction with an item;
   a depth of an item;
   a flow between two or more items;
   a transition probability associated with two or more items;
   transition probabilities associated with the items; and
   one or more children of an item.

10. The method of any preceding claim, comprising modifying and/or removing datapoints of the input data in dependence on a feature of said datapoints, preferably wherein the feature comprises one or more of:

    a type of use;
    a purpose of a use;
    a type of user;
    a duration of a use;
    a number of interactions associated with a use;
    a starting item and/or category;
    a final item and/or category;
    a date of a use; and
    a type of device associated with a user and/or a use.

11. The method of claim 10, comprising modifying datapoints of the input data that are associated with uses exceeding a threshold duration and/or modifying datapoints of the input data that are associated with return users.

12. The method of any preceding claim, comprising identifying a category of each item referenced in the input data, wherein the analysis depends on the identified categories, preferably wherein one or more parameters is associated with the categories, more preferably wherein the parameters comprise transition probabilities between categories.

13. The method of any preceding claim, comprising determining an altered transition matrix by removing a vector (e.g. a row and/or column) from a transition matrix and scaling the remaining vectors such that each vector sums to one.

14. The method of any preceding claim, wherein the input data comprises one or more of:

    datapoints identifying the interactions of a user with the items during a use of the system; and
    datapoints identifying a percentage of users that interact with a first item and thereafter interact with a second item during a use of the system.

15. An apparatus comprising:

a communication interface for receiving input data relating to a system from a plurality of input computer devices, wherein the system comprises a plurality of linked items, wherein the input data relates to interactions of one or more users with the linked items;
a processor for:

determining a stationary distribution for the system, wherein the stationary distribution indicates the probability of a user reaching each of the session-ending items;
determining a conversion rate for the system based on the stationary distribution;
altering and/or removing one of the items in dependence on the stationary distribution so as to form an altered system;
determining an altered stationary distribution for the altered system; and
determining an altered conversion rate for the altered system; and

a user interface and/or the communication interface for outputting the altered system to one or more output computer devices in dependence on the altered conversion rate being greater than the conversion rate.

# Figure 1

1000

1012

CPU <u>1002</u>

Communication interface <u>1004</u>

Memory <u>1006</u>

Storage <u>1008</u>

User interface <u>1010</u>

1014

1016

1018

# Figure 2

Receive input data relating to the items — 11

Determine parameters associated with the items — 12

Analyse interactions with the items based on the determined parameters — 13

Output the analysis — 14

# Figure 3

Figure 4

EP 4 202 807 A1

Figure 5

| | |
|---|---|
| Receive input data relating to the items | 21 |

↓

| | |
|---|---|
| Identify parameters associated with the items | 22 |

↓

| | |
|---|---|
| Analyse interactions with the items based on the input data and the parameters | 23 |

↓

| | |
|---|---|
| Determine the effect of altering an item | 24 |

↓

| | |
|---|---|
| Provide an output in dependence on the determined effect | 25 |

# Figure 6

Figure 7

EP 4 202 807 A1

What is the probability of moving from the row page grounds to the column page groups? Only transition probabilities >3% are shown.

| | Home | Product 1 | Product 2 | Category 1 | Category 2 | Static content | Blog content | About Us | Businesses | Contact Us | Existing Customers | FAQ | Get A Quote Product 1 |
|---|---|---|---|---|---|---|---|---|---|---|---|---|---|
| Start | 5% | 28% | 11% | | 26% | 18% | | | | | | | |
| Home | | 22% | 8% | | | | | | | 3% | 4% | | 4% |
| Category Page 1 | 5% | | | 23% | | | | | | 3% | 4% | | 3% |
| Product Page 2 | 3% | | | | 29% | | | | | | | | |
| Product Page 1 | 5% | 20% | | | | | | | | | | | |
| Category Page 2 | | | 6% | | | | | | | | | | |
| Static Content | | | | | | | | | | | | | 5% |
| Blog Content | 10% | 6% | | | | 23% | | 3% | | 4% | | | |
| About Us | 13% | 12% | | | | 7% | | | | 7% | | | |
| Antibody Test Covid | 15% | 18% | | | | | | | | | 4% | | |
| Apps | 6% | 7% | | | | 4% | | | | 5% | | | |
| Businesses | 7% | 6% | | | | | | | | | | | |
| Colleague Portal | 14% | 5% | | | 10% | | | | | | | 5% | |
| Contact Us | 4% | 11% | | | | 6% | | | | | | 8% | |
| Existing Customers | 10% | 16% | | | | 3% | | | | 8% | | | |
| FAQ | 5% | 11% | | 4% | 6% | | | | | 17% | | | 4% |

To Figure 8b

To Figure 8c

Figure 8a

Figure 8b

To Figure
8a

To Figure
8d

|  | Get A Quote Product 2 | How It Works | How To Claim | Individuals | Intermediaries | Other | Partners | Rewards | Purchase | Exit |
|---|---|---|---|---|---|---|---|---|---|---|
| Start |  |  |  |  |  |  |  |  |  |  |
| Home | 6% |  |  |  |  |  |  |  |  | 36% |
| Category Page 1 |  |  |  |  |  |  |  |  |  | 55% |
| Product Page 2 | 4% |  |  |  |  | 7% |  |  |  | 54% |
| Product Page 1 |  | 6% |  |  |  |  |  |  | 2% | 58% |
| Category Page 2 |  | 3% |  |  |  |  |  |  | 1% | 82% |
| Static Content |  |  |  |  |  |  |  |  |  | 82% |
| Blog Content |  |  |  | 3% |  |  |  |  |  | 36% |
| About Us |  |  |  | 4% |  |  |  |  |  | 37% |
| Antibody Test Covid |  |  | 15% | 6% |  |  |  |  |  | 34% |
| Apps |  |  |  | 4% |  |  |  |  |  | 62% |
| Businesses |  |  |  | 6% |  |  |  |  |  | 65% |
| Colleague Portal |  | 5% |  |  |  | 19% |  |  |  | 43% |
| Contact Us |  |  |  |  |  |  |  |  |  | 59% |
| Existing Customers |  |  | 10% | 4% |  |  |  |  |  | 42% |
| FAQ |  |  |  | 4% |  |  |  |  |  | 39% |

Figure 8c

EP 4 202 807 A1

EP 4 202 807 A1

Figure 8d

# Markov Attributions

**What would be the impact on conversions if the page group was completely removed from the website?**

| Page Group | Value |
|---|---|
| Static Content | 16% |
| Contact Us | 1% |
| Businesses | 0% |
| Apps | 0% |
| How To Claim | 0% |
| Refer A Friend | 0% |
| Rewards | 0% |
| Other logged in content | 0% |
| Logged in | 0% |
| Colleague Portal | 0% |
| Antibody Test Covid | 0% |
| Intermediaries | 0% |
| Product Page 2 | 0% |
| Blog Content | 0% |
| Partners | 0% |
| About Us | -1% |
| FAQ | -1% |
| Existing Companies | -1% |
| How It Works | -1% |
| Individuals | -1% |
| Home | -3% |
| Product 1 | -5% |
| Other | -5% |
| Get A Quote Product 2 | -8% |
| Get A Quote Product 1 | -10% |
| Category 2 | -31% |
| Category 1 | -37% |

Figure 9

EP 4 202 807 A1

Figure 10

33

1002　　　　　　　1004　　　　　　　1006

1008

# Figure 11

Figure 12

EP 4 202 807 A1

Europäisches
Patentamt
European
Patent Office
Office européen
des brevets

# EUROPEAN SEARCH REPORT

**Application Number**

EP 21 27 5194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/311769 A1 (SUSSMAN MICHAEL [US] ET AL) 1 October 2020 (2020-10-01)<br>* paragraphs [0003] - [0010], [0036], [0128] - [0134] * | 1-15 | INV.<br>G06Q10/06<br>G06Q10/04 |
| X | US 2015/269609 A1 (MEHANIAN COUROSH [US] ET AL) 24 September 2015 (2015-09-24)<br>* paragraphs [0008] - [0011], [0030] - [0047] * | 1-15 | |
| X | US 2018/329727 A1 (CAO YING [HK] ET AL) 15 November 2018 (2018-11-15)<br>* paragraphs [0001], [0102] - [0132] * | 1-15 | |
| X | CHOUDUR LAKSHMINARAYAN ET AL: "Modeling Complex Clickstream Data by Stochastic Models",<br>WORLD WIDE WEB, INTERNATIONAL WORLD WIDE WEB CONFERENCES STEERING COMMITTEE, REPUBLIC AND CANTON OF GENEVA SWITZERLAND, 11 April 2016 (2016-04-11), pages 879-884, XP058081264,<br>DOI: 10.1145/2872518.2891070<br>ISBN: 978-1-4503-4144-8<br>* the whole document * | 1-15 | **TECHNICAL FIELDS SEARCHED (IPC)**<br><br>G06Q |
| X | BHARATHI A VIJAYA ET AL: "Click Stream Analysis in E-Commerce Websites-a Framework",<br>2018 FOURTH INTERNATIONAL CONFERENCE ON COMPUTING COMMUNICATION CONTROL AND AUTOMATION (ICCUBEA), IEEE, 16 August 2018 (2018-08-16), pages 1-5, XP033539549,<br>DOI: 10.1109/ICCUBEA.2018.8697475<br>[retrieved on 2019-04-23]<br>* the whole document * | 1-15 | |

The present search report has been drawn up for all claims

| Place of search | Date of completion of the search | Examiner |
|---|---|---|
| Munich | 3 May 2022 | Breidenich, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 27 5194

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2022

| Patent document cited in search report | | Publication date | Patent family member(s) | | Publication date |
|---|---|---|---|---|---|
| US 2020311769 | A1 | 01-10-2020 | US 10740793 B1 | | 11-08-2020 |
| | | | US 2020311769 A1 | | 01-10-2020 |
| US 2015269609 | A1 | 24-09-2015 | CA 2941700 A1 | | 24-09-2015 |
| | | | US 2015269609 A1 | | 24-09-2015 |
| | | | WO 2015143096 A1 | | 24-09-2015 |
| US 2018329727 | A1 | 15-11-2018 | US 2018329727 A1 | | 15-11-2018 |
| | | | WO 2017120895 A1 | | 20-07-2017 |

For more details about this annex : see Official Journal of the European Patent Office, No. 12/82